# EUROPEAN PATENT APPLICATION

(11) **EP 4 535 461 A1**
(43) Date of publication of application: **09.04.2025**
(21) Application number: 23889101.4
(22) Date of filing: 07.11.2023
(51) Int. Cl.: H01M 4/36, H01M 4/58, H01M 4/525, H01M 4/505, H01M 4/136, H01M 4/131, H01M 10/052, H01M 4/02

(54) **POSITIVE ELECTRODE AND LITHIUM SECONDARY BATTERY MANUFACTURED USING SAME**

(30) Priority: 07.11.2022 KR 20220147050; 06.11.2023 KR 20230152112
(71) Applicant: LG Energy Solution, Ltd., Seoul 07335 (KR)
(72) Inventor: PARK, Jeong Hwa, Daejeon 34122 (KR); CHOI, Jung Hun, Daejeon 34122 (KR); KWON, O Jong, Daejeon 34122 (KR); KIM, Ki Woong, Daejeon 34122 (KR); AN, In Gu, Daejeon 34122 (KR); KIM, Kwang Jin, Daejeon 34122 (KR); LEE, Da Young, Daejeon 34122 (KR); SUNG, Jin Su, Daejeon 34122 (KR); HAN, Geum Jae, Daejeon 34122 (KR)
(74) Representative: Hoffmann Eitle
(86) International application number: PCT/KR2023/017725
(87) International publication number: WO 2024/101841

(57) **Abstract**

A positive electrode according to the invention is a positive electrode including a positive electrode active material layer formed on a positive electrode current collector, wherein the positive electrode active material layer includes lithium iron phosphate compound-based first positive electrode active material and a lithium nickel manganese cobalt complex oxide-based second positive electrode active material, wherein the second positive electrode active material is 10 wt% or less, based on the total weight of the first positive electrode active material and the second positive electrode active material, and the ratio (=B/A) of the average particle diameter (D₅₀) B of the second positive electrode active material to the average particle diameter (D₅₀) A of the first positive electrode active material is 3 or more.

The positive electrode according to one embodiment of the present invention, due to the improved rolling performance, the loading amount of the positive electrode can be increased, and the thickness of the positive electrode active material layer can be significantly reduced through rolling, which has the effect of providing a high energy density lithium iron phosphate-based positive electrode.

## Description

### [Technical Field]

This application claims the benefit of priority to Korean Patent Application No. 10-2022-0147050, filed on Nov. 7, 2022, and Korean Patent Application No. 10-2023-0152112, filed on Nov. 6, 2023.

The present invention relates to positive electrode and a lithium secondary battery, and more particularly to a positive electrode including a lithium iron phosphate compound-based positive electrode active material, having improved rolling performance, and to a lithium secondary battery.

### [Background Technology of the Invention]

As the technology development of and demand for electric vehicles and energy storage systems (ESSs) increase, the demand for batteries as an energy source is rapidly increasing, and accordingly, various studies on batteries capable of meeting various needs have been conducted. In particular, studies have been actively conducted on a lithium secondary battery having high energy density and excellent lifespan and cycle characteristics as a power source for such devices.

As a positive electrode active material of the lithium secondary battery, lithium cobalt oxides (LCO), lithium nickel cobalt manganese oxides (LNCMO), lithium iron phosphate (LFP), and the like have been used.

Lithium iron phosphate is inexpensive because it is abundant in resources and includes iron, which is a low-cost material. In addition, since lithium iron phosphate has low toxicity, environmental pollution can be reduced when lithium iron phosphate is used. In addition, since lithium iron phosphate has an olivine structure, an active material structure can be stably maintained at a high temperature as compared to lithium transition metal oxides having a layered structure. Accordingly, it has the advantage of excellent high-temperature stability and high-temperature lifespan characteristics of the battery.

However, lithium iron phosphate has a relatively low tap density compared to the positive electrode active materials of lithium cobalt-based oxide and lithium nickel cobalt manganese-based oxide, and its rolling performance is inferior, so it is difficult to significantly reduce the thickness of the positive electrode active material layer during rolling. Meanwhile, as the demand for high energy density lithium secondary batteries increases, the loading amount of electrode has been increasing, but rolling performance decreases when the loading amount of electrode increases, so it is necessary to develop technology to improve rolling performance in order to achieve high loading of lithium iron phosphate positive electrode.

### [Description of the Invention]

### [Technical Problem]

The present invention seeks to provide a lithium iron phosphate positive electrode with high energy density by improving rolling performance.

### [Technical Solution]

According to an exemplary embodiment of the present invention, a positive electrode including a positive electrode active material layer formed on a positive electrode current collector is provided, wherein the positive electrode active material layer comprises a lithium iron phosphate compound-based first positive electrode active material and a lithium nickel manganese cobalt complex oxide-based second positive electrode active material, wherein the second positive electrode active material is 10 wt% or less, based on the total weight of the first positive electrode active material and the second positive electrode active material, and the ratio (=B/A) of the average particle diameter (D₅₀) B of the second positive electrode active material to the average particle diameter (D₅₀) A of the first positive electrode active material is 3 or more.

In exemplary embodiments,the ratio (=B/A) of the average particle diameter (D₅₀) B of the second positive electrode active material to the average particle diameter (D₅₀) A of the first positive electrode active material may be 4 to 15.

In exemplary embodiments, the ratio (=B/A) of the average particle diameter (D₅₀) B of the second positive electrode active material to the average particle diameter (D₅₀) A of the first positive electrode active material may be 6 to 12.

In exemplary embodiments, the second positive electrode active material may be included in an amount of 5 wt% or less, based on the total weight of the first positive electrode active material and the second positive electrode active material.

In exemplary embodiments, the first positive electrode active material may have an average particle diameter (D₅₀) of 0.1 µm to 3 µm.

In exemplary embodiments, the first positive electrode active material may have an average particle diameter (D₅₀) of 0.5 µm to 1.5 µm.

In exemplary embodiments, the second positive electrode active material may have an average particle diameter (D₅₀) of 3 µm to 20 µm.

In exemplary embodiments, the first positive electrode active material may be a compound represented by Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

In exemplary embodiments, the second positive electrode active material may be a compound represented by Chemical Formula 2 below.

[Chemical Formula 2] Li ₐNi_{1-x-y}CoₓMn_{y}M1_{z}M2_{w}O₂

(In Chemical Formula 2, M1 comprises any one or more elements selected from the group consisting of W, Mo, and Cr, and M2 comprises any one or more elements selected from the group consisting of Al, Zr, Ti, Mg, Ta, and Nb, wherein 0.95≤a≤1.5, 0≤x≤0.5, 0<y≤0.5, 0≤z≤0.03, 0≤w≤0.02, and 0<x+y≤0.7)

In exemplary embodiments, the first positive electrode active material may further include a carbon coating layer on the surface.

In exemplary embodiments, the first positive electrode active material may have a monolith structure comprising primary particles.

In exemplary embodiments, the porosity according to Equation 1 below may be 24 to 30%. [Equation 1] Porosity (%) = {1- (measured density of positive electrode active material layer/true density of positive electrode active material)} × 100

In exemplary embodiments, the loading amount of the positive electrode active material layer may be in the range of 400 to 700 mg/25 cm².

According to another exemplary embodiment of the present invention, a lithium secondary battery including a positive electrode; a negative electrode; a separator interposed between the positive electrode and negative electrode; and an electrolyte is provided. The positive electrode includes a positive electrode active material layer formed on a positive electrode current collector, wherein the positive electrode active material layer comprises a lithium iron phosphate compound-based first positive electrode active material and a lithium nickel manganese cobalt complex oxide-based second positive electrode active material, wherein the second positive electrode active material is 10 wt% or less, based on the total weight of the first positive electrode active material and the second positive electrode active material, and the ratio (=B/A) of the average particle diameter (D₅₀) B of the second positive electrode active material to the average particle diameter (D₅₀) A of the first positive electrode active material is 3 or more.

### [Advantageous Effects]

The positive electrode according to exemplary embodiments of the present invention, due to improved rolling performance, can increase the loading amount of the positive electrode and significantly reduce the thickness of the positive electrode active material layer through rolling, thereby providing a high loading lithium iron phosphate-based positive electrode and a high energy density lithium secondary battery.

### [Best Mode for Carrying out the Invention]

Advantages and features of the present invention and methods for achieving the same will be apparent from the exemplary embodiments described below in detail. However, the present invention is not limited to the exemplary embodiments described below and may be implemented in various different forms. Rather, the embodiments have been provided to make the invention of the present invention thorough and complete and to fully inform those of ordinary skill in the art to which the present invention pertains of the scope of the present invention, and the present invention is defined only by the scope of the claims.

All terms used herein (including technical or scientific terms) should be interpreted as having the same meaning as commonly understood by one of ordinary skill in the art to which the present invention pertains unless otherwise defined. In addition, terms such as those defined in commonly used dictionaries are not to be interpreted in an ideal or overly formal sense unless explicitly so defined.

The terminology used herein is intended to describe embodiments and is not intended to limit the invention. In this specification, the singular includes the plural unless the context otherwise requires. The words "comprises" and/or "comprising" as used in the specification do not exclude the presence or addition of one or more other components in addition to those mentioned.

In this specification, whenever any part is said to include any component, it is not meant to exclude any other component, but rather to include additional components, unless specifically stated to the contrary.

In the present specification, reference to "A and/or B" refers to A, B, or A and B.

In the present specification, "%" refers to wt% unless clearly described otherwise.

In the present specification, D50 refers to a particle diameter corresponding to a cumulative volume of 50% in the particle diameter distribution curve. D50 may be measured, for example, by a laser diffraction method. The laser diffraction method generally enables measurement of a particle diameter ranging from submicrons to several mm and may obtain a result with high reproducibility and high resolution.

In the present specification, a "specific surface area" is measured by a Brunauer-Emmet-Teller (BET) method and may be specifically calculated from the amount of nitrogen gas adsorbed at a liquid nitrogen temperature (77 K) using BELSORP-mini II commercially available from BEL Japan.

In the present specification, a "weight-average molecular weight (Mw)" refers to a conversion value with respect to standard polystyrene measured through gel permeation chromatography (GPC). Specifically, the weight-average molecular weight is a value obtained by converting a value measured under the following conditions using GPC, and standard polystyrene of an Agilent system is used to make a calibration curve.

### < Measurement conditions >

Measurement instrument: Agilent GPC (Agilent 1200 series, USA)
Column: connected two PL Mixed B
Column temperature: 40 °C
Eluent: tetrahydrofuran
Flow rate: 1.0 mL/min
Concentration: ~1 mg/mL (100 µL injection)

Hereinafter, the present invention will be described in detail.

### Positive electrode

A positive electrode for lithium secondary battery according to an exemplary embodiment of the present invention is a positive electrode including a positive electrode active material layer formed on a positive electrode current collector, wherein the positive electrode active material layer includes lithium iron phosphate compound-based first positive electrode active material and a lithium nickel manganese cobalt complex oxide-based second positive electrode active material, wherein the second positive electrode active material is 10 wt% or less, based on the total weight of the first positive electrode active material and the second positive electrode active material, and the ratio (=B/A) of the average particle diameter (D₅₀) B of the second positive electrode active material to the average particle diameter (D₅₀) A of the first positive electrode active material is 3 or more.

The lithium iron phosphate compound-based positive electrode active material has a low tap density, which makes it difficult to significantly reduce the thickness of the positive electrode active material layer when rolling the lithium iron phosphate positive electrode. As a result of repeated research to solve these problems, the inventors discovered that when a small amount of a lithium nickel manganese cobalt composite oxide-based second positive electrode active material, which has a better tap density than the first positive electrode active material, is added, and when the ratio (=B/A) of the average particle diameter (D₅₀) B of the second positive electrode active material to the average particle diameter (D₅₀) A of the first positive electrode active material is controlled in a predetermined ratio, the rolling performance of the positive electrode is surprisingly improved, leading to the present invention.

The positive electrode according to one embodiment of the present invention has the effect of providing a high energy density positive electrode because, due to the improved rolling performance, the loading amount of the positive electrode can be increased and the thickness of the positive electrode active material layer can be significantly reduced through rolling.

The positive electrode according to one embodiment of the present invention may include a positive electrode current collector, and a positive electrode active material layer disposed on at least one side of the positive electrode current collector.

The positive electrode current collector may be, but is not limited to, any conductive material that does not cause chemical changes in the battery. For example, stainless steel, aluminum, nickel, titanium, calcined carbon, or aluminum or stainless steel whose surface is treated with carbon, nickel, titanium, silver, or the like may be used.

The positive electrode current collector can have a thickness of 3 µm to 500 µm, and fine irregularities can also be formed on the surface of the positive electrode current collector to increase adhesion to the positive electrode active material layer. For example, it can be used in various forms, such as films, sheets, foils, nets, porous materials, foams, non-woven materials, etc.

The positive electrode active material layer may include a lithium iron phosphate compound-based first positive electrode active material and a lithium nickel manganese cobalt complex oxide-based second positive electrode active material, and may further include a binder, a conductive material, a dispersant, and the like.

Each of the compositions contained in the positive electrode active material layer is described in detail below.

The present invention provides a positive electrode active material, including a first positive electrode active material, which is a lithium iron phosphate compound-based positive electrode active material, and a second positive electrode active material, which is a lithium nickel manganese cobalt complex oxide-based positive electrode active material.

According to exemplary embodiments, the first positive electrode active material may be a compound represented by Chemical Formula 1 below.

[Chemical Formula 1] Li₁₊ₐFe₁₋ₓMₓ(PO_{4-b})X_{b}

(In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively)

For example, the first positive electrode active material may be LiFePO₄. The first positive electrode active material may be primary particles, or secondary particles in which primary particles are agglomerated together, preferably having a monolith structure comprising primary particles.

In the present invention, a "monolith structure" means a structure present morphologically in an independent phase in which particles are not agglomerated together. A particle structure in contrast to the monolith structure may include a structure forming a relatively large-sized particle shape (secondary particles) through physical and/or chemical agglomeration of relatively small-sized particles (primary particles).

When the first positive electrode active material has a monolith structure consisting of primary particles, compared to the case of secondary particles, the possibility of occurrence of the phenomenon of breakage of the lithium iron phosphate particles during the rolling process is small, so that the capacity reduction due to deintercalation of the broken particles is less, which is preferable.

Furthermore, when the first positive electrode active material has a monolith structure composed of primary particles, during the drying process of the positive electrode slurry, the migration of the binder can be alleviated, thereby improving the interfacial adhesion between the positive electrode current collector and the positive electrode active material layer. In exemplary embodiments, the first positive electrode active material may further include a carbon coating layer on the surface. When a carbon coating layer is formed on the surface of the lithium iron phosphate, electrical conductivity may be improved, thereby improving the resistance characteristics of the positive electrode.

The carbon coating layer may be formed using at least one raw material selected from the group consisting of glucose, sucrose, lactose, starch, oligosaccharides, polyoligosaccharides, fructose, cellulose, polymers of furfuryl alcohol, block copolymers of ethylene and ethylene oxide, vinyl-based resins, cellulose-based resins, phenolic resins, pitch-based resins, and tar-based resins. Specifically, the carbon coating layer may be formed by mixing the raw material with the lithium iron phosphate followed by heat treatment.

In exemplary embodiments, the average particle diameter D₅₀ of the first positive electrode active material may be from 0.1 µm to 3.0 µm, preferably from 0.5 µm to 1.5 µm, more preferably from 0.6 µm to 1.3 µm. When the average particle diameter D₅₀ of the positive electrode active material satisfies the above range, the mobility of the lithium in the lithium iron phosphate may be improved, thereby improving the charge and discharge characteristics of the battery.

In exemplary embodiments, the BET specific surface area of the first positive electrode active material may be from 5 m²/g to 20 m²/g, more particularly from 7 m²/g to 18 m²/g, more particularly from 9 m²/g to 16 m²/g. When the above ranges are satisfied, the agglomeration of the first positive electrode active material can be effectively suppressed even in a positive electrode slurry composition having a relatively low dispersant content.

According to exemplary embodiments, the second positive electrode active material may be a compound represented by Chemical Formula 2 below.

[Chemical Formula 2] LiₐNi_{1-x-y}CoₓMn_{y}M1_{z}M2_{w}O₂

(In Chemical Formula 2, M1 comprises any one or more elements selected from the group consisting of W, Mo, and Cr, and M2 comprises any one or more elements selected from the group consisting of Al, Zr, Ti, Mg, Ta, and Nb, wherein 0.95≤a≤1.5, 0≤x≤0.5, 0<y≤0.5, 0≤z≤0.03, 0≤w≤0.02, and 0<x+y≤0.7)

For example, the second positive electrode active material may be LiNi_{0.6}Co_{0.2}Mn_{0.2}O₂ or LiNi_{0.8}Mn_{0.1}Co_{0.1}O₂, and the like, and any one or mixtures of two or more of these may be used.

The lithium nickel manganese cobalt complex oxide-based positive electrode active material, represented by the Chemical Formula 2 above, has a superior tap density compared to the lithium iron phosphate compound, and serves to improve the rolling performance of the positive electrode.
In exemplary embodiments, the second positive electrode active material may include a single particle of primary particles, or may include a secondary particle comprising a plurality of primary particles agglomerated together. Here, the primary particles may be uniform or nonuniform.

In exemplary embodiments, the average particle diameter D₅₀ of the second positive electrode active material may be from 3 µm to 20 µm, more particularly from 3 µm to 18 µm, and more particularly from 4 µm to 15 µm. If the average particle size of the second positive electrode active material exceeds 20 µm, there is a possibility that sedimentation of the second positive electrode active material particles may occur during the preparation of the positive electrode slurry, and if the average particle diameter of the second positive electrode active material is less than 3 µm, the effect of improving the rolling performance may be insignificant, which is undesirable.

In exemplary embodiments, the second positive electrode active material may be 10 wt% or less, more specifically 5 wt% or less, more specifically 0.01 wt% to 1 wt%, based on the total weight of the first positive electrode active material and the second positive electrode active material.

The second positive electrode active material, which is added to improve rolling performance, has shown a saturation of rolling performance improving effect at a level of 5 wt% to 10 wt%, relative to the total weight of the first positive electrode active material and the second positive electrode active material. Therefore, considering the capacity characteristics, it is preferable to include the second positive electrode active material at a level in the above numerical range.

In exemplary embodiments, a value of the ratio (=B/A) of the average particle diameter (D₅₀) B of the second positive electrode active material to the average particle diameter (D₅₀) A of the first positive electrode active material may be 3 or more, more particularly 4 to 15, and more particularly 6 to 12. If the value of the ratio (=B/A) of the average particle diameter (D₅₀) B of the second positive electrode active material to the average particle diameter (D₅₀) A of the first positive electrode active material is less than 3, the effect of improving the rolling performance may be small, so the B/A value is preferably at least 3. Furthermore, the larger the B/A value, the smaller the limit rolling thickness and the limit rolling porosity of the positive electrode tend to be, but when the B/A value is 15 or more, the level of reduction of the limit rolling thickness and the limit rolling porosity converge to a certain level, so the B/A value is preferably within the above numerical range. Here, the limit rolling thickness refers to the thickness of the positive electrode active material layer and the porosity of the positive electrode active material layer when rolled as much as possible within a range that does not cause damage such as breaks in the positive electrode current collector.

The positive electrode active material layer may further include, in addition to the first and second positive electrode active materials described above, a binder, a conductive material, and a dispersant.

The binder is included to enhance adhesion between the positive electrode active material particles and adhesion of the positive electrode active material to the current collector. Specific examples of such binders include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, and regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluorinated rubber, or various copolymers thereof, any one of which may be used alone or a mixture of two or more. The binder may be included in an amount of 1 wt% to 30 wt% based on the total weight of the positive electrode active material layer.

The conductive material is not particularly limited as long as it imparts conductivity without causing chemical changes in the battery, and may be, for example: graphite; carbon black such as carbon black, acetylene black, Ketjen black, channel black, furnace black, lamp black, or thermal black; conductive fibers such as carbon fibers or metal fibers; fluorocarbon; a metal powder such as aluminum powder, or nickel powder; conductive whiskers such as zinc oxide or potassium titanate; a conductive metal oxide such as titanium oxide; a conducting material such as a polyphenylene derivative, or the like. Specific examples of a commercially available conductive material may include acetylene black-based products (available from Chevron Chemical Company, Denka Singapore Private Limited (Denka Black), and Gulf Oil Company), Ketjen black, the EC series (available from Armak Company), Vulcan XC-72 (available from Cabot Company), Super P (available from Timcal Co., Ltd.), and the like. Preferably, the conductive material may be carbon nanotubes. When the conductive material is carbon nanotubes, an excellent conductive network of the carbon nanotubes may suppress a binder migration phenomenon in which the binder moves to the electrode surface when the electrode is dried, thereby further improving interfacial adhesion between the positive electrode current collector and the positive electrode active material layer.

In exemplary embodiments, the conductive material may be included in the positive electrode active material layer in an amount of 0.3 wt% to 2.0 wt%, specifically 0.4 wt% to 1.5 wt%, and more specifically 0.5 wt% to 1.3 wt%. When the content of the conductive material in the positive electrode active material layer satisfies the above range, the conductive network of the positive electrode is ensured, so that the electrical conductivity of the positive electrode may be improved.

The dispersant inhibits excessive agglomeration of especially the first positive electrode active material in the positive electrode slurry, and enables the first and second positive electrode active materials to exist effectively dispersed in the prepared positive electrode active material layer.

The dispersant may include a hydrogenated nitrile-based copolymer, and specifically, the dispersant may be a hydrogenated nitrile-based copolymer.
Specifically, the hydrogenated nitrile-based copolymer may be a copolymer including a structural unit derived from α,β-unsaturated nitrile and a structural unit derived from a hydrogenated conjugated diene or a copolymer including a structural unit derived from α,β-unsaturated nitrile, a structural unit derived from a conjugated diene, and a structural unit derived from a hydrogenated conjugated diene. As the α,β-unsaturated nitrile monomer, for example, acrylonitrile, methacrylonitrile, and the like may be used, which may be used alone or in a mixture of two or more thereof. As the conjugated diene-based monomer, for example, a C4 to C6 conjugated diene-based monomer such as 1,3-butadiene, isoprene, 2,3-methyl butadiene, and the like may be used, which may be used alone or in a mixture of two or more thereof.

More specifically, the hydrogenated nitrile-based copolymer may be a hydrogenated nitrile-based butadiene rubber (H-NBR). Here, the hydrogenated nitrile-based butadiene rubber may have a weight-average molecular weight (Mw) of 10,000 g/mol to 100,000 g/mol, preferably 15,000 g/mol to 90,000 g/mol, and more preferably 20,000 g/mol to 50,000 g/mol. When the hydrogenated nitrile-based butadiene rubber satisfies the above numerical range, the effect of suppressing agglomeration of the conductive material is further excellent, and even when the conductive material is agglomerated, since the agglomeration is spherical rather than linear, the specific surface area of the agglomerated conductive material may be minimized as compared to a case in which the conductive material is linearly agglomerated. As a result, a surface area of the positive electrode active material, which is located adjacent to the agglomerated conductive material and does not participate in a lithium intercalation/deintercalation reaction, is minimized, and thus discharge resistance of the lithium secondary battery may be lowered.

The dispersant may be included in an amount of 0.1 wt% to 2.0 wt%, specifically 0.2 wt% to 1.8 wt%, and more specifically 0.3 wt% to 1.6 wt% based on the total solid content of the positive electrode slurry composition. When the content of the dispersant satisfies the above range, agglomeration of the positive electrode active material may be suppressed, thereby preventing gelation of the positive electrode slurry composition.

In exemplary embodiments, the positive electrode active material layer may include 94 to 98 wt% of a positive electrode active material, 0.5 to 2 wt% of a conductive material, 1.0 to 4.0 wt% of a binder, and 0.5 to 2 wt% of the dispersant. When the composition of the positive electrode active material layer satisfies the above-described range, the adhesion and conductivity of the electrode are secured, and by increasing the active material content, the capacity and resistance performance of the lithium secondary battery including the positive electrode are improved.

The positive electrode according to the present invention may be manufactured according to conventional positive electrode manufacturing methods. Specifically, the positive electrode may be manufactured by preparing a positive electrode slurry including the first and second positive electrode active materials, conductive materials, binders and/or dispersants, applying the positive electrode slurry to a positive electrode current collector, followed by drying and rolling.

Alternatively, the positive electrode may be prepared by casting the positive electrode slurry onto a separate support and then laminating the film obtained by peeling off from the support onto the positive electrode current collector.

The positive electrode active material layer according to the present invention is composed of bimodal forms of positive electrode active materials, wherein the average particle diameter of the first positive electrode active material and the average particle diameter of the second positive electrode active material are different, so that the voids between the particles of the second positive electrode active material having a larger average particle diameter can be filled with the first positive electrode active material having a smaller average particle diameter, and due to the presence of the second positive electrode active material having a higher tap density, it has an improved rolling density, resulting in the realization of a high loading/high energy density of the positive electrode.

The positive electrode according to exemplary embodiments may have a porosity according to Equation 1 below of 24 to 30%, specifically 24 to 29%, more specifically 25 to 28%. Porosity (%) = {1- (measured density of positive electrode active material layer/true density of positive electrode active material)} × 100

The above numerical range of porosity is a reduced level than the porosity of a positive electrode including mainly lithium iron phosphate compound-based positive electrode active material as a positive electrode active material. According to the present invention, since the rolling performance is improved, the density after rolling can be increased, so that the porosity can be within the above numerical range.

In exemplary embodiments, the loading amount of the positive electrode active material layer may be in the range of 400 to 700 mg/25 mL, more specifically 450 to 700 mg/25 mL, and more specifically 500 to 650 mg/25 mL. The loading amount is a loading amount based on the positive electrode active material layer disposed on one side of the current collector. According to the present invention, even for a positive electrode including the positive electrode active material layer with the above level of high loading amount, the rolling performance is improved, so that, while having the above loading amount, the porosity according to Equation 1 may be 24 to 30%, particularly 24 to 29%, more particularly 25 to 28%.

### Lithium secondary battery

Next, a lithium secondary battery according to the present invention will be described.

A lithium secondary battery according to one embodiment of the present invention may include a positive electrode, a negative electrode, a separator interposed between the positive electrode and the negative electrode, and an electrolyte.

In the lithium secondary battery, the positive electrode is the same as described above. For example, the positive electrode includes a positive electrode active material layer formed on a positive electrode current collector, wherein
the positive electrode active material layer includes a lithium iron phosphate compound-based first positive electrode active material and a lithium nickel manganese cobalt complex oxide-based second positive electrode active material, wherein
the second positive electrode active material is 10 wt% or less, based on the total weight of the first positive electrode active material and the second positive electrode active material, and
the ratio (=B/A) of the average particle diameter (D₅₀) B of the second positive electrode active material to the average particle diameter (D₅₀) A of the first positive electrode active material is 3 or more.

The positive electrode has been described in detail previously, so repeated description will be omitted.

The negative electrode may be prepared, for example, by preparing a composition for forming a negative electrode including a negative electrode active material, a negative electrode binder, and a negative electrode conductive material, and then applying the composition over the negative electrode current collector.

The negative electrode active material is not particularly limited, and any compound capable of reversibly intercalating and deintercalating lithium may be used. Specific examples thereof include: carbonaceous materials such as artificial graphite, natural graphite, graphitized carbon fiber, amorphous carbon, high-crystallinity carbon, and the like; (semi)metal-based materials capable of alloying with lithium, such as Si, Al, Sn, Pb, Zn, Bi, In, Mg, Ga, Cd, a Si alloy, a Sn alloy, an Al alloy, and the like; and composites including (semi)metal-based materials and carbonaceous materials. In addition, examples of low-crystallinity carbon include soft carbon and hard carbon, and examples of high-crystallinity carbon include natural graphite, Kish graphite, pyrolytic carbon, mesophase pitch-based carbon fiber, meso-carbon microbeads, mesophase pitches, and high-temperature sintered carbon such as petroleum or coal tar pitch-derived cokes, which may be used alone or in a mixture of two or more thereof. In addition, as the negative electrode active material, a lithium metal thin film may be used.

The negative electrode conductive material is used to impart conductivity to the electrode, and any conductive material that does not cause a chemical change in a battery and has conductivity may be used without particular limitation. Specific examples of the negative electrode conductive material include graphite such as natural graphite, synthetic graphite, and the like; carbon-based materials such as carbon black, acetylene black, Ketjen black, channel black, furnace black, lamp black, thermal black, carbon fibers, carbon nanotubes, and the like; powders or fibers of metals such as copper, nickel, aluminum, silver, and the like; conductive whiskers such as zinc oxide, potassium titanate, and the like; conductive metal oxides such as titanium oxide and the like; and conductive polymers such as polyphenylene derivatives and the like, which may be used alone or in a mixture of two or more thereof. The negative electrode conductive material may be typically included in an amount of 1 to 30 wt%, specifically 1 to 20 wt%, and more specifically 1 to 10 wt% with respect to the total weight of a negative electrode active material layer.

The negative electrode binder serves to enhance cohesion between negative electrode active material particles and adhesion between the negative electrode active material and the negative electrode current collector. Specific examples of the negative electrode binder include polyvinylidene fluoride (PVdF), a vinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), a sulfonated EPDM, styrene butadiene rubber (SBR), fluoro-rubber, and various copolymers thereof, which may be used alone or in a mixture of two or more thereof. The negative electrode binder may be included in an amount of 1 wt% to 30 wt%, specifically 1 wt% to 20 wt%, and more specifically 1 wt% to 10 wt% with respect to the total weight of the negative electrode active material layer.

Meanwhile, the negative electrode current collector is not particularly limited as long as it does not cause a chemical change in a battery and has high conductivity. For example, copper, stainless steel, aluminum, nickel, titanium, sintered carbon, or copper or stainless steel whose surface has been treated with carbon, nickel, titanium, silver, or the like, an aluminum-cadmium alloy, or the like may be used as the negative electrode current collector.

In addition, the negative electrode current collector may have a thickness of 3 to 500 µm, and like the positive electrode current collector, fine irregularities may be formed on a surface of the negative electrode current collector to increase the binding force of the negative electrode active material. For example, the negative electrode current collector may be used in various forms including a film, a sheet, a foil, a net, a porous body, a foamed body, a non-woven fabric, and the like.

Meanwhile, as the separator in the lithium secondary battery, any separator that is typically used as a separator in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stacked structure having two or more layers thereof may be used. **In** addition, a typical porous non-woven fabric, for example, a non-woven fabric formed of a high melting point glass fiber or a polyethylene terephthalate fiber, may be used. In addition, the separator may be a porous thin film having a pore diameter of 0.01 µm to 10 µm and a thickness of 5 µm to 300 µm.

Meanwhile, in the lithium secondary battery, the electrolyte may include an organic solvent and a lithium salt, which are typically used in an electrolyte, and they are not particularly limited.

As the organic solvent, any solvent that may serve as a medium through which ions involved in an electrochemical reaction of a battery can migrate may be used without particular limitation. Specifically, as the organic solvent, an ester-based solvent such as methyl acetate, ethyl acetate, γ-butyrolactone, ε-caprolactone, or the like; an ether-based solvent such as dibutyl ether, tetrahydrofuran, or the like; a ketone-based solvent such as cyclohexanone or the like; an aromatic hydrocarbon-based solvent such as benzene, fluorobenzene, or the like; or a carbonate-based solvent such as dimethyl carbonate (DMC), diethyl carbonate (DEC), methyl ethyl carbonate (MEC), ethyl methyl carbonate (EMC), ethylene carbonate (EC), propylene carbonate (PC), or the like may be used.

Among these, a carbonate-based solvent is preferably used, and a mixture of a cyclic carbonate having high ionic conductivity and a high dielectric constant, such as ethylene carbonate or propylene carbonate, which can increase the charge and discharge performance of the battery, and a linear carbonate-based compound with low viscosity (for example, ethyl methyl carbonate, dimethyl carbonate, diethyl carbonate, or the like) is more preferably used.

The lithium salt is not particularly limited as long as it is a compound capable of providing lithium ions used in a lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used as the lithium salt. The lithium salt is preferably included at a concentration of about 0.6 mol% to 2 mol% in the electrolyte.

In addition to the above-described electrolyte components, the electrolyte may further include one or more additives such as pyridine, triethylphosphite, triethanolamine, cyclic ether, ethylenediamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, and the like for the purpose of enhancing the lifetime characteristics of a battery, suppressing a decrease in battery capacity, enhancing the discharge capacity of a battery, or the like. In this case, the additives may be included in an amount of 0.1 to 5 wt% with respect to the total weight of the electrolyte.

The lithium secondary battery according to the present invention may be manufactured by interposing a separator between the positive electrode and the negative electrode to form an electrode assembly, placing the electrode assembly in a cylindrical battery case or a prismatic battery case, and injecting an electrolyte. Alternatively, the lithium secondary battery may be manufactured by stacking the electrode assembly, impregnating the same with an electrolyte, placing the resultant in a battery case, and sealing the battery case.

In the manufacture of the lithium secondary battery according to the present invention, the electrode assembly may be dried to remove one or more organic solvents selected from the group consisting of N-methyl-2-pyrrolidone (NMP), acetone, ethanol, propylene carbonate, ethylmethyl carbonate, ethylene carbonate, and dimethyl carbonate, which are used in the manufacture of the positive electrode. When an electrolyte having the same components as the organic solvent used in the manufacture of the positive electrode is used as the electrolyte, the process of drying the electrode assembly may be omitted.

Unlike the above-described lithium secondary battery, a lithium secondary battery according to another embodiment of the present invention may be an all-solid-state battery.

As the battery case, any battery case that is typically used in the art may be used, and there is no limitation on an outer shape according to the purpose of the battery. For example, the outer shape of the battery case may be a cylindrical shape using a can, a prismatic shape, a pouch shape, a coin shape, or the like.

The lithium secondary battery according to the present invention is useful in the fields of portable devices such as mobile phones, laptop computers, digital cameras, and the like, energy storage systems (ESSs), and electric vehicles such as hybrid electric vehicles (HEVs) and the like due to stably exhibiting excellent discharge capacity, output characteristics, and a capacity retention rate.

Hereinafter, the present invention will be described in more detail with reference to examples. However, the following examples are merely presented to exemplify the present invention, and the scope of the present invention is not limited to the following examples.

### Example 1: Manufacture of positive electrode

LiFePO₄, which is a primary particle of a monolith structure having an average particle diameter D₅₀ of 1.0 µm, as a first positive electrode active material, and LiNi_{0.6}Mn_{0.2}Co_{0.2}O₂, which is a secondary particle having an average particle diameter D₅₀ of 7 to 8 µm, as a second positive electrode active material, were mixed in a weight ratio of 99.5: 0.5 to prepare a positive electrode active material. Carbon nanotubes (CNTs) as a conductive material, polyvinylidene fluoride (PVdF) as a binder, and hydrogenated nitrile butadiene rubber (HNBR) as a dispersant were added to N-methylpyrrolidone (NMP) solvent. Mixing was performed at 2500 rpm for 90 minutes using a homo-disperser to prepare a positive electrode slurry.

In the positive electrode slurry, the positive electrode active material, the conductive material, the binder, and the dispersant were present in a weight ratio of 95 : 1.2 : 3.0 : 0.8, and a solid content of the positive electrode slurry was 62 wt%.

The positive electrode slurry was applied onto a 20 µm-thick aluminum thin film to be 600 mg/25 cm² and then hot air dried at 130 °C for 5 minutes so that the positive electrode slurry had a solid content of 99.0 wt% or more (thickness of the positive electrode active material after drying was about 140 µm).

### Example 2: Manufacture of positive electrode

The positive electrode was prepared by the same method as in Example 1, except that the weight ratio of the first positive electrode active material and the second positive electrode active material was changed to 99.9: 0.1.

### Example 3: Manufacture of positive electrode

The positive electrode was prepared by the same method as in Example 1, except that the second positive electrode active material was changed to LiNi_{0.6}Mn_{0.2}Co_{0.2}O₂ with an average secondary particle diameter D₅₀ of 4 to 5 µm.

### Example 4: Manufacture of positive electrode

The positive electrode was prepared by the same method as in Example 1, except that the second positive electrode active material was changed to LiNi_{0.6}Mn_{0.2}Co_{0.2}O₂ with an average secondary particle diameter D₅₀ of 11 to 12 µm.

### Example 5: Manufacture of positive electrode

The positive electrode was prepared by the same method as in Example 1, except that the second positive electrode active material was changed to LiNi_{0.6}Mn_{0.2}Co_{0.2}O₂ having an average secondary particle diameter D₅₀ of 14 to 15 µm.

### Example 6: Manufacture of positive electrode

The positive electrode was prepared by the same method as in Example 1, except that the weight ratio of the first positive electrode active material and the second positive electrode active material was changed to 95: 5.

### Example 7: Manufacture of positive electrode

The positive electrode was prepared by the same method as in Example 1, except that the weight ratio of the first positive electrode active material and the second positive electrode active material was changed to 90: 10.

### Comparative Example 1: Manufacture of positive electrode

The positive electrode was prepared in the same method as in Example 1, except that the weight ratio of the first positive electrode active material and the second positive electrode active material was changed to 100: 0.

### Comparative Example 2: Manufacture of positive electrode

The positive electrode was prepared by the same method as in Example 1, except that the second positive electrode active material was changed to LiNi_{0.6}Mn_{0.2}Co_{0.2}O₂ with an average secondary particle diameter D₅₀ of 2 µm.

### Experimental Example: Measurement of limit rolling thickness and limit rolling porosity

For each positive electrode prepared in Examples 1-7 and Comparative Examples 1-2, the limit rolling thickness and limit rolling porosity were measured and the results are shown in Table 1. In the method of measuring the limit rolling thickness, the positive electrode is first rolled to a porosity of 30% according to Equation 1 below, and if no breaks occur in the current collector, it is rolled again to a porosity of 29%. Porosity (%) = {1- (measured density of positive electrode active material layer/true density of positive electrode active material)} × 100

In this manner, the positive electrode is rolled while decreasing the porosity step by step, and the process is repeated until a break occurs in the current collector, and the thickness of the positive electrode active material layer measured at the rolling level just before the break occurs is defined as the limit rolling thickness, and the porosity at the rolling level just before the break occurs is defined as the limit rolling porosity. For the limit rolling porosity, the porosity of the positive electrode according to Comparative Example 1 is evaluated as 1, and the porosity of the positive electrode according to Examples 1-7 and Comparative Example 2 is described as a relative ratio to the porosity of the positive electrode according to Comparative Example 1.

**[Table 1]**

| | Weight ratio of second positive electrode active material to total weight of first and second positive electrode active materials (%) | Ratio (=B/A) of the average particle diameter (D₅₀) B of the second positive electrode active material to the average particle diameter (D₅₀) A of the first positive electrode active material | Limit rolling thickness | Limit rolling porosity |
|---|---|---|---|---|
| Example 1 | 0.5 | 7~8 | 99.1 | 0.8 |
| Example 2 | 0.1 | 7~8 | 99.7 | 0.95 |
| Example 3 | 0.5 | 4~5 | 99.4 | 0.89 |
| Example 4 | 0.5 | 11~12 | 99.0 | 0.79 |
| Example 5 | 0.5 | 14~15 | 99.0 | 0.79 |
| Example 6 | 5 | 7~8 | 98.6 | 0.77 |
| Example 7 | 10 | 7~8 | 98.5 | 0.75 |
| Comparative Example 1 | 0 | - | 103 | 1 |
| Comparative Example 2 | 0.5 | 2 | 101 | 0.99 |

The positive electrodes according to any of Examples 1 through 7 all have a smaller limit rolling thickness and a smaller limit rolling porosity compared to the positive electrode according to Comparative Example 1, which does not include a second positive electrode active material. Furthermore, the positive electrodes according to any of Examples 1 through 7 all have a smaller limit rolling thickness and a smaller limit rolling porosity compared to the positive electrode according to Comparative Example 2, which includes a second positive electrode active material but has a ratio (=B/A) of the average particle diameter (D₅₀) B of the second positive electrode active material to the average particle diameter (D₅₀) A of the first positive electrode active material of 2.

Meanwhile, the positive electrode according to Example 6, wherein the weight ratio of the second positive electrode active material is 5 wt%, and the positive electrode according to Example 7, wherein the weight ratio of the second positive electrode active material is 10 wt%, have similar limit rolling thickness and limit rolling porosity, and it is analyzed that the improvement effect of rolling performance converges to a certain level when the weight ratio of the second positive electrode active material is above a certain ratio.

Furthermore, since the positive electrode according to Example 4 and the positive electrode according to Example 5 have similar limit rolling thickness and limit rolling porosity, it is analyzed that when the ratio (=B/A) of the average particle diameter (D₅₀) B of the second positive electrode active material to the average particle diameter (D₅₀) A of the first positive electrode active material exceeds a certain numerical range, the improvement level of the rolling performance does not increase indefinitely, but converges to a certain level.

As such, the positive electrode according to the present invention may provide a high loading positive electrode and a high energy density lithium secondary battery by improving rolling performance in a positive electrode having 90 wt% or more of lithium iron phosphate-based positive electrode active material as a positive electrode active material.

## Claims

1. A positive electrode comprising a positive electrode active material layer formed on a positive electrode current collector, wherein
the positive electrode active material layer comprises a lithium iron phosphate compound-based first positive electrode active material and a lithium nickel manganese cobalt complex oxide-based second positive electrode active material, wherein
the second positive electrode active material is 10 wt% or less, based on the total weight of the first positive electrode active material and the second positive electrode active material, and
the ratio (=B/A) of the average particle diameter D₅₀ B of the second positive electrode active material to the average particle diameter D₅₀ A of the first positive electrode active material is 3 or more.

2. The positive electrode for lithium secondary battery of claim 1, wherein
the ratio (=B/A) of the average particle diameter D₅₀ B of the second positive electrode active material to the average particle diameter D₅₀ A of the first positive electrode active material is 4 to 15.

3. The positive electrode for lithium secondary battery of claim 2, wherein
the ratio (=B/A) of the average particle diameter D₅₀ B of the second positive electrode active material to the average particle diameter D₅₀ A of the first positive electrode active material is 6 to 12.

4. The positive electrode for lithium secondary battery of claim 1, wherein
the second positive electrode active material is 5 wt% or less, based on the total weight of the first positive electrode active material and the second positive electrode active material.

5. The positive electrode for lithium secondary battery of claim 1, wherein
the first positive electrode active material has an average particle diameter D₅₀ of 0.1 µm to 3 µm.

6. The positive electrode for lithium secondary battery of claim 1, wherein
the first positive electrode active material has an average particle diameter D₅₀ of 0.5 µm to 1.5 µm.

7. The positive electrode for lithium secondary battery of claim 1, wherein
the second positive electrode active material has an average particle diameter D₅₀ of 3 µm to 20 µm.

8. The positive electrode for lithium secondary battery of claim 1, wherein
the first positive electrode active material is a compound represented by Chemical Formula 1 below.
[Chemical Formula 1] Li₁₊ₐFe₁₋ₓMₓ(PO_{4-b})X_{b}
In Chemical Formula 1, M comprises one or more elements selected from the group consisting of Al, Mg, Ni, Co, Mn, Ti, Ga, Cu, V, Nb, Zr, Ce, In, Zn, and Y, X comprises one or more elements selected from the group consisting of F, S, and N, and a, b, and x are - 0.5≤a≤0.5, 0≤b≤0.1, and 0≤x≤0.5, respectively

9. The positive electrode for lithium secondary battery of claim 1, wherein
the second positive electrode active material is a compound represented by Chemical Formula 2 below.
[Chemical Formula 2] LiₐNi_{1-x-y}CoₓMn_{y}M1_{z}M2_{w}O₂
In Chemical Formula 2, M1 comprises any one or more elements selected from the group consisting of W, Mo, and Cr, and M2 comprises any one or more elements selected from the group consisting of Al, Zr, Ti, Mg, Ta, and Nb, wherein 0.95≤a≤1.5, 0≤x≤0.5, 0<y≤0.5, 0≤z≤0.03, 0≤w≤0.02, and 0<x+y≤0.7

10. The positive electrode for lithium secondary battery of claim 1, wherein
the first positive electrode active material further comprises a carbon coating layer on the surface.

11. The positive electrode for lithium secondary battery of claim 1, wherein
the first positive electrode active material has a monolith structure comprising primary particles.

12. The positive electrode for lithium secondary battery of claim 1, wherein
the porosity according to Equation 1 below is 24 to 30%. Porosity (%) = {1- (measured density of positive electrode active material layer/true density of positive electrode active material)} × 100

13. The positive electrode for lithium secondary battery of claim 1, wherein
the loading amount of the positive electrode active material layer is in the range of 400 to 700 mg/25 cm².

14. A lithium secondary battery comprising:
a positive electrode; a negative electrode; a separator interposed between the positive electrode and negative electrode; and an electrolyte, wherein
the positive electrode comprises:
a positive electrode active material layer formed on a positive electrode current collector, wherein
the positive electrode active material layer comprises a lithium iron phosphate compound-based first positive electrode active material and a lithium nickel manganese cobalt complex oxide-based second positive electrode active material, wherein
the second positive electrode active material is 10 wt% or less, based on the total weight of the first positive electrode active material and the second positive electrode active material, and
the ratio (=B/A) of the average particle diameter D₅₀ B of the second positive electrode active material to the average particle diameter D₅₀ A of the first positive electrode active material is 3 or more.
